# EUROPÄISCHE PATENTANMELDUNG

(11) **EP 3 925 756 A1**
(43) Veröffentlichungstag der Anmeldung: **22.12.2021**
(21) Anmeldenummer: 21163347.4
(22) Anmeldetag: 18.03.2021
(51) Int. Cl.: B29C 44/04, B29C 44/08, B29C 44/34, B29C 44/06, B29C 44/44, B29K 105/04, B29L 31/30, B29L 31/00

(54) **VERFAHREN ZUR HERSTELLUNG EINES FORMKÖRPERS**

(30) Priorität: 15.06.2020 DE 102020115696
(71) Anmelder: IZOBLOK GmbH, 99885 Ohrdruf (DE)
(72) Erfinder: BARTH, Ronny, 99735 Wolkramshausen (DE); MARONDE, Christian, 99885 Luisenthal (DE); BEYER, Christian, 99092 Erfurt (DE)
(74) Vertreter: Liedtke & Partner Patentanwälte

(57) **Zusammenfassung**

Die Erfindung betrifft ein Verfahren zur Herstellung eines Formteils (1), wobei ein Werkzeug (2) bereitgestellt wird, das als eine geschlossene oder verschließbare Hohlform ausgebildet ist und mindestens einen beweglichen Schieber (3) aufweist, der in das Werkzeug (2) einfahrbar ist, wobei der mindestens eine Schieber (3) seitliche Begrenzungen (3.1) sowie eine stirnseitige Begrenzung (3.2) zum Werkzeug (2) hin aufweist, wobei das Verfahren die folgenden Schritte umfasst:
- Einfahren des mindestens einen Schiebers (3) in das Werkzeug (2), Einfüllen eines ersten Partikelmaterials (M1) in das Werkzeug (2), Ansintern des ersten Partikelmaterials (M1) durch Bedampfen,
- partielles Zurückziehen des mindestens einen Schiebers (3) aus dem Werkzeug (2), so dass ein zuvor durch den Schieber (3) eingenommener, vom ersten Partikelmaterial (M1) auf mehreren Seiten umgebener, Kernbereich als Hohlraum verbleibt, Einfüllen eines zweiten Partikelmaterials (M2) in diesen Hohlraum, Ansintern des zweiten Partikelmaterials (M2) durch Bedampfen,
- weiteres Zurückziehen des mindestens einen Schiebers (3) aus dem Werkzeug (2), so dass ein zuvor durch den Schieber (3) eingenommener, vom ersten Partikelmaterial (M1) und vom zweiten Partikelmaterial (M2) auf mehreren Seiten umgebener, Bereich als Hohlraum verbleibt, Einfüllen eines dritten Partikelmaterials (M3) in diesen Hohlraum,
- finales Bedampfen des ersten, zweiten und dritten Partikelmaterials (M1, M2, M3).

## Beschreibung

Die Erfindung betrifft ein Verfahren zur Herstellung eines Formkörpers.

Es ist bekannt, Formteile aus EPP mit mehr als einer Materialkomponente zu produzieren. Beispielsweise können Formkörper, insbesondere Thermoboxen, aus zwei oder mehr verschiedenfarbigen der EPP-Materialkomponenten mit gleicher Dichte gefertigt werden.

Der Erfindung liegt die Aufgabe zu Grunde, ein verbessertes Verfahren zur Herstellung eines Formkörpers anzugeben.

Die Aufgabe wird erfindungsgemäß gelöst durch ein Verfahren mit den Merkmalen des Anspruchs 1.

Vorteilhafte Ausgestaltungen der Erfindung sind Gegenstand der Unteransprüche.

Bei einem erfindungsgemäßen Verfahren zur Herstellung eines Formteils wird ein Werkzeug bereitgestellt, das als eine geschlossene oder verschließbare Hohlform ausgebildet ist und mindestens einen beweglichen Schieber aufweist, der in das Werkzeug einfahrbar ist, wobei der mindestens eine Schieber seitliche Begrenzungen sowie eine stirnseitige Begrenzung zum Werkzeug hin aufweist, wobei das Verfahren die folgenden Schritte umfasst:
- Einfahren des mindestens einen Schiebers in das Werkzeug, Einfüllen eines ersten Partikelmaterials in das Werkzeug, Ansintern des ersten Partikelmaterials durch Bedampfen,
- partielles Zurückziehen des mindestens einen Schiebers aus dem Werkzeug, so dass ein zuvor durch den Schieber eingenommener, vom ersten Partikelmaterial auf mehreren Seiten umgebener, Kernbereich als Hohlraum verbleibt, Einfüllen eines zweiten Partikelmaterials in diesen Hohlraum, Ansintern des zweiten Partikelmaterials durch Bedampfen,
- weiteres Zurückziehen des mindestens einen Schiebers aus dem Werkzeug, so dass ein zuvor durch den Schieber eingenommener, vom ersten Partikelmaterial und vom zweiten Partikelmaterial auf mehreren Seiten umgebener, Bereich als Hohlraum verbleibt, Einfüllen eines dritten Partikelmaterials in diesen Hohlraum,
- finales Bedampfen des ersten, zweiten und dritten Partikelmaterials.

Auf diese Weise kann ein Formteil mit einem Kern realisiert werden, dessen Dichte und/oder Festigkeit anders ist als Dichte und/oder Festigkeit der umgebenden Bereiche des Formteils, ohne dass beim Formprozess Teile gegebenenfalls manuell eingelegt werden müssen.

In einer Ausführungsform wird das erste, zweite und/oder dritte Partikelmaterial durch mindestens einen Injektor in das Werkzeug eingebracht.

In einer Ausführungsform wird der Injektor bedarfsweise in das Werkzeug eingefahren und daraus ausgefahren.

In einer Ausführungsform wird als Formteil ein Stoßabsorber für ein Kraftfahrzeug hergestellt.

In einer Ausführungsform sind das erste, zweite und/oder dritte Partikelmaterial aus gleichen oder unterschiedlichen Polymeren gebildet und weisen unterschiedliche Festigkeiten und/oder Dichten auf.

In einer Ausführungsform erfolgt das Ansintern so, dass das jeweilige Partikelmaterial unvollständig aufschäumt, flexibel und/oder plastisch und/oder breiig wird oder bleibt und die Partikel aneinander haften, beispielsweise bei 125 °C.

In einer Ausführungsform werden/wird das zweite Partikelmaterial und/oder das dritte Partikelmaterial während des Zurückziehens des Schiebers oder nach dem Zurückziehen des Schiebers eingebracht.

In einer Ausführungsform ist das dritte Partikelmaterial gleich dem ersten Partikelmaterial.

In einer Ausführungsform sind das erste Partikelmaterial und das dritte Partikelmaterial Polyethylen, wobei das zweite Partikelmaterial Polypropylen ist.

Ferner wird vorliegend ein Werkzeug zur Herstellung eines Formteils angegeben, insbesondere mittels des Verfahrens nach einem der vorhergehenden Ansprüche, wobei das Werkzeug als eine geschlossene oder verschließbare Hohlform ausgebildet ist und mindestens einen beweglichen Schieber aufweist, der in das Werkzeug einfahrbar und aus dem Werkzeug in zumindest zwei Schritten ausfahrbar ist, wobei der mindestens eine Schieber seitliche Begrenzungen sowie eine stirnseitige Begrenzung zum Werkzeug hin aufweist, wobei mindestens ein Injektor zum Einfüllen eines Partikelmaterials in das Werkzeug vorgesehen ist, wobei mindestens eine Dampfleitung zum Bedampfen des Werkzeugs vorgesehen ist, wobei vorzugsweise der Schieber zum Zwecke des Bedampfens siebartig und/oder porös ausgebildet ist.

Die Erfindung betrifft ein Verfahren zur Herstellung eines Formkörpers, insbesondere aus EPP-Partikelschaumstoffen und/oder anderen Polymeren in unterschiedlichen Materialkombinationen. Dabei erfolgt beispielsweise eine dreidimensionale Umschäumung einer Bauteilgeometrie mit unterschiedlichen Materialtypen von Partikelschaumstoffen aus EPP (expandiertes Polypropylen) und/oder anderen Polymeren, insbesondere in einem einstufigen Prozess.

Das Verfahren kann beispielsweise mit Formteilautomaten und entsprechend angepassten Werkzeugen durchgeführt werden.

Die vorliegende Erfindung erlaubt die Verarbeitung verschiedener Materialkomponenten aus EPP und/oder anderen Polymeren mit unterschiedlichen Dichten, insbesondere mit hohen Dichteunterschieden, in einem Produktionsschritt.

Die Herstellung von Formteilen durch Verschweißen von EPP-Partikeln mittels des Nassdampf-Verfahrens für Formteilgeometrien über 60mm ist bekannt. Die Parametrierung einer dabei verwendeten Formteilmaschine ist abhängig von Schüttdichte, Geometrie und Dampfströmung. Die Kombination von Materialien aus EPP und/oder anderen Polymeren mit unterschiedlichen Dichten von beispielsweise 20 g/l und 100 g/l wird durch die vorliegende Erfindung ermöglicht.

Dabei werden Materialien aus EPP und/oder anderen Polymeren mit unterschiedlichen Rohstoffdichten in unterschiedlichen Bauteilgeometrien dreidimensional umschäumt. Die Positionen und Lage der Spots abweichender Rohstoffdichte können dabei frei gewählt werden und es können Formteile beispielsweise für den Bereich Automotive ausgelegt werden.

Es können Formteile mit verschiedenen Rohstoffdichten (beispielsweise Raumdichte 20 kg/m³ bis 250 kg/m³) mit unterschiedlichen Kombinationen von zwei, drei oder mehr Komponenten aus EPP und/oder anderen Polymeren in einem Fertigungsschritt produziert werden.

Somit verringern sich die Fertigungszeit und der Energiebedarf, so dass Kostenvorteile entstehen, da die Formteile nicht, wie im Stand der Technik bekannt, mit Einlegeteilen produziert werden müssen.

Beispielsweise können crashrelevante Formteile für den Automotiv-Bereich, insbesondere Stoßabsorber, hergestellt werden. Weitere Anwendungen für mittels der erfindungsgemäßen Lösung hergestellte Formteile ergeben sich im Bereich Sicherheitstechnik, Fahrzeugtechnik sowie für Konstruktionsteile, sowie Verkleidungen oder Anwendungen in Kombinationen.

Ausführungsbeispiele der Erfindung werden im Folgenden anhand von Zeichnungen näher erläutert.

Darin zeigen:
- Figur 1: ist eine schematische Ansicht einer Ausführungsform eines Formwerkzeugs zur Herstellung eines Formteils während eines ersten Schritts,
- Figur 2: ist eine schematische Ansicht des Werkzeugs während eines zweiten Schritts,
- Figur 3: ist eine schematische Ansicht einer weiteren Ausführungsform eines Formwerkzeugs zur Herstellung eines Formteils während eines ersten Schritts,
- Figur 4: ist eine schematische Ansicht des Werkzeugs während eines zweiten Schritts,
- Figur 5: ist eine schematische Ansicht einer weiteren Ausführungsform eines Formwerkzeugs zur Herstellung eines Formteils während eines ersten Schritts,
- Figur 6: ist eine schematische Ansicht des Werkzeugs während eines zweiten Schritts, und
- Figur 7: ist eine schematische Ansicht des Werkzeugs während eines dritten Schritts.

Einander entsprechende Teile sind in allen Figuren mit den gleichen Bezugszeichen versehen.

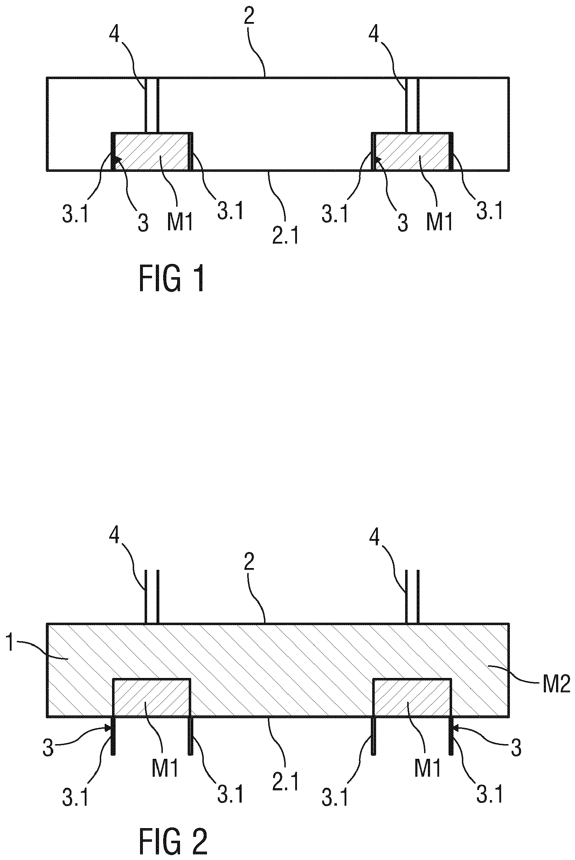

**Figur 1** ist eine schematische Ansicht einer Ausführungsform eines Formwerkzeugs 2 zur Herstellung eines Formteils 1.

In einer beispielhaften Ausführungsform wird ein Formteil 1, beispielsweise ein Stoßabsorber für ein Kraftfahrzeug, in einem Formwerkzeug 2 hergestellt.

Das Formteil 1 weist abschnittsweise unterschiedliche Festigkeiten und/oder Dichten auf.

Das Werkzeug 2 ist als eine geschlossene oder verschließbare Hohlform ausgebildet und weist mindestens einen beweglichen Schieber 3 auf, der in das Werkzeug 2 eingefahren werden kann. Ferner ist mindestens ein Injektor 4 zum Einbringen von geschäumten Partikeln in das Werkzeug 2, insbesondere im Bereich des mindestens einen beweglichen Schiebers 3, vorgesehen. Der Injektor 4 kann in das Werkzeug 2 einfahrbar ausgebildet sein. Der mindestens eine Schieber 3 weist seitliche Begrenzungen 3.1 auf, ist jedoch an einer Stirnseite zum Werkzeug 2 hin offen. Der Schieber 3 befindet sich beispielsweise an einer Unterseite 2.1 des Werkzeugs 2, die sich in Gebrauchslage unten befindet, so dass im Schieber 3 befindliches Material durch Schwerkraft dort verbleibt.

In einem ersten Schritt sind oder werden die Schieber 3 in das Werkzeug 2 eingefahren und ein erstes Partikelmaterial M1 wird durch die Injektoren 4 innerhalb der seitlichen Begrenzungen 3.1 in den Schieber 3 eingefüllt. Das erste Partikelmaterial M1 kann anschließend durch Bedampfen angesintert werden, so dass es unvollständig aufschäumt, flexibel und/oder plastisch und/oder breiig wird oder bleibt und die Partikel aneinander haften. Das Ansintern kann beispielsweise bei 125 °C erfolgen.

**Figur 2** ist eine schematische Ansicht des Werkzeugs 2 während eines zweiten Schritts. Die Schieber 3 und optional die Injektoren 4 werden aus dem Werkzeug 2 zurückgezogen und ein zweites Partikelmaterial M2 wird danach oder optional gleichzeitig in den Hohlraum des Werkzeugs 2 eingebracht.

Das Werkzeug 2 mit dem ersten Partikelmaterial M1 und dem zweiten Partikelmaterial M2 wird anschließend bedampft, um die Partikel miteinander zu verschweißen, beispielsweise mit 135 °C.

Das erste Partikelmaterial M1 kann ein Polymer sein, beispielsweise PET. Das zweite Partikelmaterial M2 kann ebenfalls ein Polymer sein, beispielsweise PP. Ebenso können das erste Partikelmaterial M1 und das zweite Partikelmaterial M2 aus dem gleichen Polymer bestehen, jedoch unterschiedliche Dichten und Festigkeiten aufweisen.

Die seitlichen Begrenzungen 3.1 der Schieber 3 und die Wandungen des Werkzeugs 2 können Öffnungen zum Bedampfen aufweisen, die kleiner sind als ein Durchmesser der Partikelmaterialien M1, M2.

Zum Entnehmen des fertigen Formteils 1 kann das Werkzeug 2 geöffnet werden.

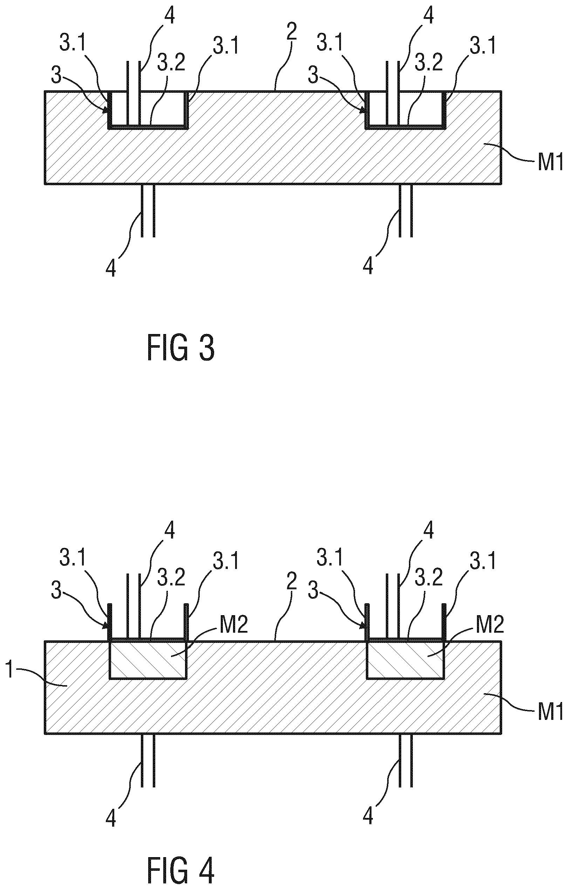

**Figur 3** ist eine schematische Ansicht einer weiteren Ausführungsform eines Formwerkzeugs 2 zur Herstellung eines Formteils 1.

In einer beispielhaften Ausführungsform wird ein Formteil 1, beispielsweise ein Stoßabsorber für ein Kraftfahrzeug, in einem Formwerkzeug 2 hergestellt.

Das Formteil 1 weist abschnittsweise unterschiedliche Festigkeiten und/oder Dichten auf.

Das Werkzeug 2 ist als eine geschlossene oder verschließbare Hohlform ausgebildet und weist mindestens einen beweglichen Schieber 3 auf, der in das Werkzeug 2 eingefahren werden kann. Ferner kann mindestens ein Injektor 4 zum Einbringen von geschäumten Partikeln in das Werkzeug 2, insbesondere im Bereich des mindestens einen beweglichen Schiebers 3, vorgesehen sein. Der Injektor 4 kann in das Werkzeug 2 einfahrbar ausgebildet sein. Der mindestens eine Schieber 3 weist seitliche Begrenzungen 3.1 sowie eine stirnseitige Begrenzung 3.2 zum Werkzeug 2 hin auf.

In einem ersten Schritt sind oder werden die Schieber 3 in das Werkzeug 2 eingefahren und ein erstes Partikelmaterial M1 wird in das Werkzeug 2 eingefüllt. Das erste Partikelmaterial M1 kann anschließend durch Bedampfen angesintert werden, so dass es unvollständig aufschäumt, flexibel und/oder plastisch und/oder breiig wird oder bleibt und die Partikel aneinander haften. Das Ansintern kann beispielsweise bei 125 °C erfolgen.

**Figur 4** ist eine schematische Ansicht des Werkzeugs 2 während eines zweiten Schritts. Die Schieber 3 und optional die Injektoren 4 werden aus dem Werkzeug 2 zurückgezogen, so dass ein zuvor durch den Schieber 3 eingenommener Bereich als Hohlraum zugänglich wird. Ein zweites Partikelmaterial M2 wird danach oder optional gleichzeitig in diesen Hohlraum eingebracht.

Das Werkzeug 2 mit dem ersten Partikelmaterial M1 und dem zweiten Partikelmaterial M2 wird anschließend bedampft, um die Partikel miteinander zu verschweißen, beispielsweise mit 135 °C.

Das erste Partikelmaterial M1 kann ein Polymer sein, beispielsweise PET. Das zweite Partikelmaterial M2 kann ebenfalls ein Polymer sein, beispielsweise PP. Ebenso können das erste Partikelmaterial M1 und das zweite Partikelmaterial M2 aus dem gleichen Polymer bestehen, jedoch unterschiedliche Dichten und Festigkeiten aufweisen.

Die seitlichen Begrenzungen 3.1 und die stirnseitige Begrenzung 3.2 der Schieber 3 sowie die Wandungen des Werkzeugs 2 können Öffnungen zum Bedampfen aufweisen, die kleiner sind als ein Durchmesser der Partikelmaterialien M1, M2.

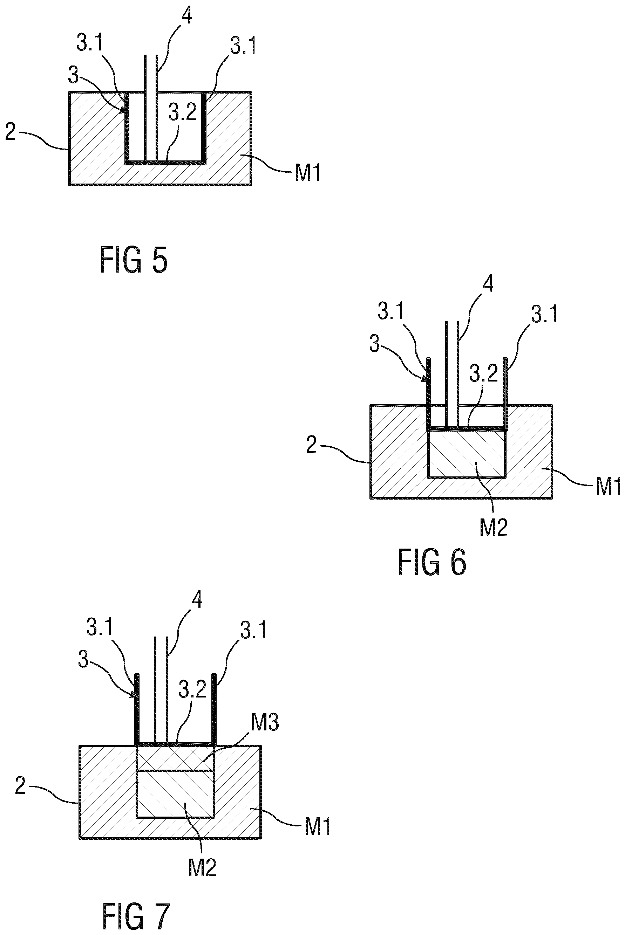

**Figur 5** ist eine schematische Schnittansicht einer weiteren Ausführungsform eines Formwerkzeugs 2 zur Herstellung eines Formteils 1.

In einer beispielhaften Ausführungsform wird ein Formteil 1, beispielsweise ein Stoßabsorber für ein Kraftfahrzeug, in einem Formwerkzeug 2 hergestellt.

Das Formteil 1 weist abschnittsweise unterschiedliche Festigkeiten und/oder Dichten auf.

Das Werkzeug 2 ist als eine geschlossene oder verschließbare Hohlform ausgebildet und weist mindestens einen beweglichen Schieber 3 auf, der in das Werkzeug 2 eingefahren werden kann. Ferner kann mindestens ein Injektor 4 zum Einbringen von geschäumten Partikeln in das Werkzeug 2, insbesondere im Bereich des mindestens einen beweglichen Schiebers 3, vorgesehen sein. Der Injektor 4 kann in das Werkzeug 2 einfahrbar ausgebildet sein. Der mindestens eine Schieber 3 weist seitliche Begrenzungen 3.1 sowie eine stirnseitige Begrenzung 3.2 zum Werkzeug 2 hin auf.

In einem ersten Schritt sind oder werden die Schieber 3 in das Werkzeug 2 eingefahren und ein erstes Partikelmaterial M1 wird in das Werkzeug 2 eingefüllt. Das erste Partikelmaterial M1 kann anschließend durch Bedampfen angesintert werden, so dass es unvollständig aufschäumt, flexibel und/oder plastisch und/oder breiig wird oder bleibt und die Partikel aneinander haften. Das Ansintern kann beispielsweise bei 125 °C erfolgen.

**Figur 6** ist eine schematische Ansicht des Werkzeugs 2 während eines zweiten Schritts. Die Schieber 3 werden teilweise aus dem Werkzeug 2 zurückgezogen, so dass ein zuvor durch den Schieber 3 eingenommener Kernbereich als Hohlraum zugänglich wird. Ein zweites Partikelmaterial M2 wird danach oder optional gleichzeitig in diesen Hohlraum eingebracht. Das zweite Partikelmaterial M2 kann anschließend durch Bedampfen angesintert werden, so dass es unvollständig aufschäumt, flexibel und/oder plastisch und/oder breiig wird oder bleibt und die Partikel aneinander haften. Das Ansintern kann beispielsweise bei 125 °C erfolgen.

**Figur 7** ist eine schematische Ansicht des Werkzeugs 2 während eines dritten Schritts. Die Schieber 3 werden weiter, beispielsweise vollständig, aus dem Werkzeug 2 zurückgezogen, so dass ein weiterer zuvor durch den Schieber 3 eingenommener Bereich als Hohlraum zugänglich wird. Ein drittes Partikelmaterial M3 wird danach oder optional gleichzeitig in diesen Hohlraum eingebracht. Das dritte Partikelmaterial M3 kann gleich dem ersten Partikelmaterial M1 sein.

Das Werkzeug 2 mit dem ersten, zweiten und dritten Partikelmaterial M1, M2, M3 wird anschließend bedampft, um die Partikel miteinander zu verschweißen, beispielsweise mit 135 °C.

Das erste und dritte Partikelmaterial M1, M3 kann ein Polymer sein, beispielsweise PET. Das zweite Partikelmaterial M2 kann ebenfalls ein Polymer sein, beispielsweise PP. Ebenso können das erste Partikelmaterial M1 und das zweite Partikelmaterial M2 aus dem gleichen Polymer bestehen, jedoch unterschiedliche Dichten und Festigkeiten aufweisen.

Die seitlichen Begrenzungen 3.1 und die stirnseitige Begrenzung 3.2 der Schieber 3 sowie die Wandungen des Werkzeugs 2 können Öffnungen zum Bedampfen aufweisen, die kleiner sind als ein Durchmesser der Partikelmaterialien M1, M2, M3.

Auf diese Weise kann ein Formteil 1 mit einem Kern realisiert werden, dessen Dichte und/oder Festigkeit anders ist als Dichte und/oder Festigkeit der umgebenden Bereiche des Formteils 1, ohne dass beim Formprozess Teile gegebenenfalls manuell eingelegt werden müssen.

Der Schieber 3 kann für die Bedampfung mit einer separaten Dampfleitung versehen sein. Der Schieber 3 kann beispielsweise mittels 3D-Druck siebartig und/oder porös ausgebildet sein.

Ein weiteres Ausführungsbeispiel betrifft ein Verfahren zur Herstellung eines Formteils (1), wobei ein Werkzeug (2) bereitgestellt wird, das als eine geschlossene oder verschließbare Hohlform ausgebildet ist und mindestens einen beweglichen Schieber (3) aufweist, der in das Werkzeug (2) einfahrbar ist, wobei der mindestens eine Schieber (3) seitliche Begrenzungen (3.1) aufweist und stirnseitig zum Werkzeug (2) hin offen ist, wobei das Verfahren die folgenden Schritte umfasst:
- Einfahren des mindestens einen Schiebers (3) in das Werkzeug (2) von unten, Einfüllen eines ersten Partikelmaterials (M1) in das Werkzeug (2) innerhalb der seitlichen Begrenzungen (3.1), Ansintern des ersten Partikelmaterials (M1) durch Bedampfen,
- Zurückziehen des mindestens einen Schiebers (3) aus dem Werkzeug (2), Einfüllen eines zweiten Partikelmaterials (M2) in das Werkzeug,
- finales Bedampfen des ersten und zweiten Partikelmaterials (M1, M2).

Ein weiteres Ausführungsbeispiel betrifft ein Verfahren zur Herstellung eines Formteils (1), wobei ein Werkzeug (2) bereitgestellt wird, das als eine geschlossene oder verschließbare Hohlform ausgebildet ist und mindestens einen beweglichen Schieber (3) aufweist, der in das Werkzeug (2) einfahrbar ist, wobei der mindestens eine Schieber (3) seitliche Begrenzungen (3.1) sowie eine stirnseitige Begrenzung (3.2) zum Werkzeug (2) hin aufweist, wobei das Verfahren die folgenden Schritte umfasst:
- Einfahren des mindestens einen Schiebers (3) in das Werkzeug (2), Einfüllen eines ersten Partikelmaterials (M1) in das Werkzeug (2), Ansintern des ersten Partikelmaterials (M1) durch Bedampfen,
- Zurückziehen des mindestens einen Schiebers (3) aus dem Werkzeug (2), so dass ein zuvor durch den mindestens einen Schieber (3) eingenommener Bereich als Hohlraum verbleibt, Einfüllen eines zweiten Partikelmaterials (M2) in diesen Hohlraum,
- finales Bedampfen des ersten und zweiten Partikelmaterials (M1, M2).

### BEZUGSZEICHENLISTE

- 1: Formteil
- 2: Werkzeug
- 2.1: Unterseite
- 3: Schieber
- 3.1: seitliche Begrenzung
- 3.2: stirnseitige Begrenzung
- 4: Injektor
- M1: erstes Partikelmaterial
- M2: zweites Partikelmaterial
- M3: drittes Partikelmaterial

## Patentansprüche

1. Verfahren zur Herstellung eines Formteils (1), wobei ein Werkzeug (2) bereitgestellt wird, das als eine geschlossene oder verschließbare Hohlform ausgebildet ist und mindestens einen beweglichen Schieber (3) aufweist, der in das Werkzeug (2) einfahrbar ist, wobei der mindestens eine Schieber (3) seitliche Begrenzungen (3.1) sowie eine stirnseitige Begrenzung (3.2) zum Werkzeug (2) hin aufweist, wobei das Verfahren die folgenden Schritte umfasst:
- Einfahren des mindestens einen Schiebers (3) in das Werkzeug (2), Einfüllen eines ersten Partikelmaterials (M1) in das Werkzeug (2), Ansintern des ersten Partikelmaterials (M1) durch Bedampfen,
- partielles Zurückziehen des mindestens einen Schiebers (3) aus dem Werkzeug (2), so dass ein zuvor durch den Schieber (3) eingenommener, vom ersten Partikelmaterial (M1) auf mehreren Seiten umgebener, Kernbereich als Hohlraum verbleibt, Einfüllen eines zweiten Partikelmaterials (M2) in diesen Hohlraum, Ansintern des zweiten Partikelmaterials (M2) durch Bedampfen,
- weiteres Zurückziehen des mindestens einen Schiebers (3) aus dem Werkzeug (2), so dass ein zuvor durch den Schieber (3) eingenommener, vom ersten Partikelmaterial (M1) und vom zweiten Partikelmaterial (M2) auf mehreren Seiten umgebener, Bereich als Hohlraum verbleibt, Einfüllen eines dritten Partikelmaterials (M3) in diesen Hohlraum,
- finales Bedampfen des ersten, zweiten und dritten Partikelmaterials (M1, M2, M3).

2. Verfahren nach Anspruch 1, wobei das erste, zweite und/oder dritte Partikelmaterial (M1, M2, M3) durch mindestens einen Injektor (4) in das Werkzeug (2) eingebracht wird.

3. Verfahren nach einem der Ansprüche 1 oder 2, wobei der Injektor (4) in das Werkzeug (2) eingefahren und daraus ausgefahren wird.

4. Verfahren nach einem der vorhergehenden Ansprüche, wobei als Formteil (1) ein Stoßabsorber für ein Kraftfahrzeug hergestellt wird.

5. Verfahren nach einem der vorhergehenden Ansprüche, wobei das erste, zweite und/oder dritte Partikelmaterial (M1, M2, M3) aus gleichen oder unterschiedlichen Polymeren gebildet sind und unterschiedliche Festigkeiten und/oder Dichten aufweisen.

6. Verfahren nach einem der vorhergehenden Ansprüche, wobei das Ansintern so erfolgt, dass das jeweilige Partikelmaterial (M1, M2) unvollständig aufschäumt, flexibel und/oder plastisch und/oder breiig wird oder bleibt und die Partikel aneinander haften.

7. Verfahren nach einem der vorhergehenden Ansprüche, wobei das zweite Partikelmaterial (M2) und/oder das dritte Partikelmaterial (M3) während des Zurückziehens des Schiebers (3) oder nach dem Zurückziehen des Schiebers (3) eingebracht werden/wird.

8. Verfahren nach einem der vorhergehenden Ansprüche, wobei das dritte Partikelmaterial (M3) gleich dem ersten Partikelmaterial (M1) ist.

9. Verfahren nach einem der vorhergehenden Ansprüche, wobei das erste Partikelmaterial (M1) und das dritte Partikelmaterial (M3) Polyethylen ist, wobei das zweite Partikelmaterial (M2) Polypropylen ist.
